# FASCICULE DE BREVET EUROPEEN

(11) **EP 2 336 608 B1**
(45) Date de publication et mention de la délivrance du brevet: **15.10.2014**
(21) Numéro de dépôt: 10192220.1
(22) Date de dépôt: 23.11.2010
(51) Int. Cl.: F16J 15/06, B62D 3/12

(54) **Assemblage de carters pour systèmes de direction de véhicules automobiles**
Gehäuseanordnung für Fahrzeuglenksysteme
Casings assembly for automobile steering systems

(30) Priorité: 18.12.2009 FR 0959181
(43) Date de publication de la demande: 22.06.2011
(73) Titulaire: Jtekt Europe, 69540 Irigny (FR)
(72) Inventeur: Rey, Laurent, 69100 Villeurbanne (FR)
(74) Mandataire: Chevalier, Renaud Philippe

(56) Documents cités:
- WO-A1-2009/101779
- FR-A5- 2 159 119
- GB-A- 2 032 877
- ANONYMOUS: "I.T.R. shaft boot/valve housing adapter interface", RESEARCH DISCLOSURE, MASON PUBLICATIONS, HAMPSHIRE, GB, vol. 436, no. 18, 1 août 2000 (2000-08-01) , XP007126565, ISSN: 0374-4353

## Description

La présente invention concerne, d'une façon générale, les systèmes de direction des véhicules automobiles. Plus particulièrement, cette invention s'intéresse à un assemblage de deux ou plusieurs carters dans un système de direction, ces carters pouvant être réalisés en métal, notamment en aluminium, ou bien en matière plastique.

Les systèmes de direction des véhicules automobiles, purement manuels ou à assistance hydraulique ou à assistance électrique, comportent en général des mécanismes logés dans des carters en aluminium et/ou en matière plastique. Ces mécanismes sont habituellement assemblés les uns aux autres au moyen de vis qui réunissent entre eux leurs carters respectifs pour former le système de direction. Ainsi on connaît, par exemple, des systèmes de direction composés d'un carter de direction principal, dans lequel est logée et montée coulissante une crémaillère, et d'un carter secondaire situé au point de raccordement de la colonne de direction et logeant un capteur, tel qu'un capteur de couple, utilisé pour l'assistance de la direction, les deux carters étant assemblés entre eux au moyen de deux vis diamétralement opposées.

Le système de direction doit être étanche vis-à-vis de l'extérieur, pour fonctionner convenablement sur une longue durée. La localisation du système de direction, entre le moteur du véhicule et la chaussée, et aussi les conditions auxquelles est exposé le système de direction, rendent les exigences d'étanchéité très sévères. En particulier, un système de direction doit résister au lavage à haute pression et au brouillard salin, ce qui est vérifié en le soumettant à des tests spécifiques :
- Lavage à haute pression : Un jet d'eau à une pression de 80 à 100 bars, et à une température de 80 à 100° C, est émis à une distance de 10 à 30 cm par rapport au système de direction, plusieurs passages successifs du jet étant effectués.
- Brouillard salin : Le système de direction est soumis, pendant plusieurs centaines d'heures, à la projection d'un brouillard d'eau acide, donc corrosive, représentative des sels utilisés pour le déneigement des routes.

Ces deux tests sont particulièrement sévères pour les assemblages vissés de carters des systèmes de direction, puisqu'ils sollicitent la zone critique constituée par le plan de jonction entre deux carters adjacents.

Il est connu d'insérer des moyens d'étanchéité entre deux carters assemblés par des vis. Ces moyens d'étanchéité sont notamment constitués par des joints, de diverses formes, mis en place entre les deux carters, dans le plan de jonction.

L'assemblage de deux carters, ou d'un carter et d'un couvercle, dans le domaine des systèmes de direction, pout se faire avec un emboîtement - voir les documents de brevets WO 2009/101779 et FR 2159119. Toutefois, l'emboîtement est peu profond et par conséquent peu efficace du point de vue de l'étanchéité. En réalité, cet emboîtement vise uniquement à réaliser un positionnement ou centrage mécanique des deux carters, l'un par rapport à l'autre, en vue de leur assemblage.

Les solutions d'étanchéité existantes, telles que rappelées ci-dessus, présentent d'une manière générale l'inconvénient de laisser une distance entre l'extérieur du plan de jonction, à la surface des carters assemblés, et le joint utilisé pour obtenir l'étanchéité désirée. Ainsi de l'eau sous haute pression ou du liquide corrosif a la possibilité de progresser jusqu'au joint, dans le plan de jonction. La corrosion se produisant alors dans le plan de jonction et/ou à proximité du joint compromet l'étanchéité de l'assemblage des carters.

Le document « I.T.R. shaft boot/valve housing adapter interface », RESEARCH DISCLOSURE, MASON PUBLICATIONS, HAMPSHIRE, GB, vol. 436, no. 18, 1 août 2000 (2000-08-01) XP007126565, ISSN: 0374-4353 divulgue un dispositif de raccordement avec un joint et une collerette de protection. Cette dernière présente une fente latérale de grande profondeur, participant à un système de verrouillage mécanique. En raison de la présence d'une telle fente, dont le fond est proche du joint, ce dispositif n'améliore pas l'étanchéité, en particulier vis-à-vis d'un jet d'eau ou de liquide sous haute pression qui pénétrerait par ladite fente.

La présente invention a pour but d'éviter ces inconvénients, en fournissant une solution protectrice appliquée au niveau du plan de jonction entre deux carters et capable de limiter efficacement l'effet nocif des jets de lavage à la haute pression et/ou du brouillard salin, de sorte que l'étanchéité du système de direction s'en trouve améliorée, de manière durable.

A cet effet, l'invention a pour objet un assemblage d'au moins deux carters dans un système de direction de véhicule automobile, en particulier un assemblage du type vissé et comportant des moyens d'étanchéité, incluant notamment au moins un joint mis en place dans un plan de jonction entre deux carters, cet assemblage étant caractérisé par le fait que les moyens d'étanchéité comprennent aussi une collerette de protection qui est solidaire de l'un des carters et qui dépasse de ce carter en entourant le plan de jonction, et qui recouvre en partie un autre carter en laissant entre cet autre carter et elle-même un jeu d'assemblage, la hauteur de la collerette de protection étant égale ou supérieure à six fois la valeur du jeu d'assemblage, et cette collerette de protection s'étendant d'une manière continue, sans interruption, sur toute la périphérie de carter auquel elle se trouve rattachée.

Ainsi, le problème à la base de l'invention est résolu pour l'ajout, sur l'un des carters, d'une collerette de protection qui recouvre la périphérie du plan de jonction et de la zone adjacente appartenant à l'autre carter.

De préférence, la collerette de protection est formée sur le carter situé en position supérieure, et elle recouvre en partie le carter situé en position inférieure, le système de direction étant considéré ici dans sa position montée sur le véhicule. Ainsi, cette collerette est orientée vers le bas, de manière à ne pas créer une accumulation d'eau au niveau du plan de jonction des deux carters.

Dans ce cas, le carter supérieur est préférentiellement réalisé en matière plastique moulée, afin de limiter les coûts d'obtention de la collerette de protection d'une part, celle-ci étant réalisée par moulage avec le carter supérieur, et de limiter l'impact de la corrosion de cette collerette par le brouillard salin d'autre part.

Dans un mode de réalisation de l'invention, la collerette de protection solidaire de l'un des carters recouvre en partie l'autre carter, en ménageant un jeu d'assemblage qui reste rempli par l'air ambiant. Ce mode de réalisation est particulièrement simple et économique, le jeu entre la collerette et le second carter, qui est en particulier le carter inférieur, permettant un assemblage aisé des deux carters. Après assemblage, la collerette s'avère ici particulièrement efficace contre les jets de lavage à haute pression, en limitant l'accès de l'eau au plan de jonction par un effet de « chicane » si le jet vient du bas, ou par un effet « d'écran » si le jet vient du haut. La collerette limite aussi l'accès du brouillard salin au plan de jonction, par un effet « d'écran ». Le rapport entre la hauteur de cette collerette et la valeur du jeu (six fois supérieure ou plus) permet d'obtenir l'effet de « chicane » désiré.

Dans un autre mode de réalisation de l'invention, le jeu d'assemblage entre la collerette de protection et la partie de carter recouverte par cette collerette de protection est rempli d'une matière d'étanchéité, introduite lors de l'assemblage des carters. La matière d'étanchéité, qui vient finalement combler le jeu d'assemblage, peut être au choix :
- Une graisse très visqueuse, ou
- Une résine élastomère réticulable souple, du type époxyde, polyuréthane, acrylate ou silicone, ou encore
- Un joint en caoutchouc, comprimé entre la collerette de protection et la partie de carter recouverte par cette collerette, ledit joint étant mis en compression lors de l'assemblage des carters.

Ce deuxième mode de réalisation est encore plus efficace, puisque la matière d'étanchéité, remplissant finalement le jeu d'assemblage, constitue une « barrière » qui protège le plan de jonction entre les deux carters.

L'invention sera mieux comprise à l'aide de la description qui suit, en référence au dessin schématique annexé représentant, à titre d'exemples, quelques formes d'exécution de cet assemblage de carters pour systèmes de direction :
Figure 1 est une vue en perspective d'un système de direction, et plus particulièrement de ses carters, auquel est applicable la présente invention ;
Figure 2 est une vue en coupe passant par deux carters assemblés l'un à l'autre, selon un premier mode de réalisation de l'invention ;
Figure 3 représente, en coupe et à l'échelle agrandie, un détail d'un assemblage de carters, selon un deuxième mode de réalisation de l'invention.

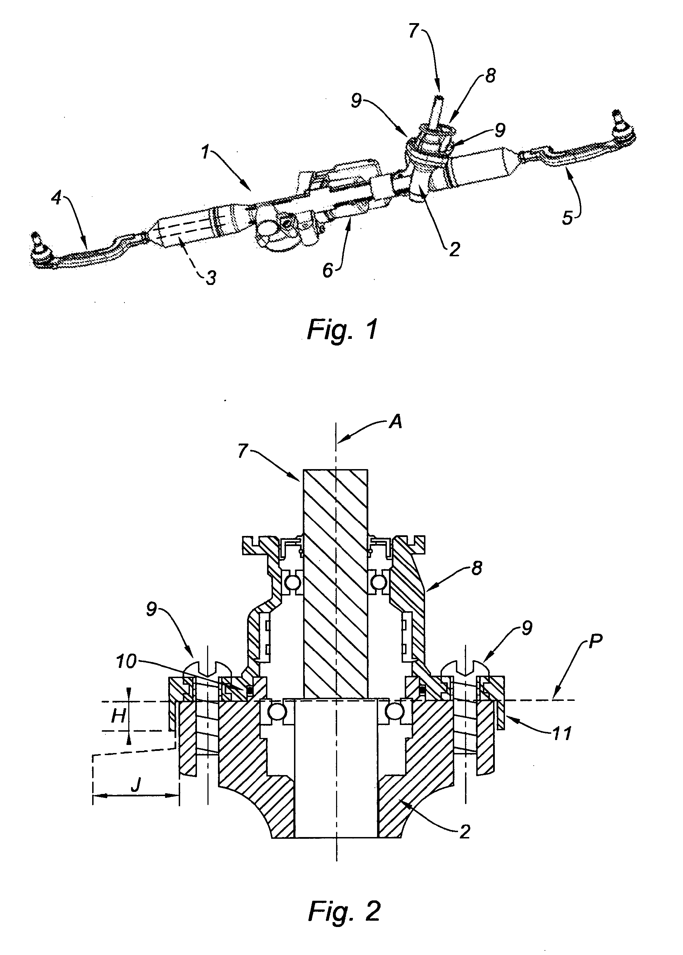

En se référant à la figure 1, qui représente un système de direction 1 et plus particulièrement une direction assistée électrique, il est rappelé qu'un tel système comprend un carter de direction principal 2, de forme allongée, dans lequel est montée coulissante une crémaillère 3 dont les deux extrémités, situées à l'extérieur du carter principal 2, sont respectivement liées par l'intermédiaire de biellettes 4 et 5 aux roues directrices droite et gauche (non représentées) du véhicule. S'agissant ici d'une direction assistée électrique, celle-ci comprend un moteur électrique d'assistance 6, qui dans l'exemple illustré est accouplé, par l'intermédiaire d'un réducteur de vitesse, à la crémaillère 3. Une colonne de direction, reliée à un volant de conduite, aboutit à un arbre d'entrée 7 de la direction, qui est lié en rotation à un pignon de direction en prise avec la crémaillère 3. Au niveau de l'arbre d'entrée 7, il est prévu un carter 8 logeant un capteur de couple, à partir duquel est pilotée la fonction d'assistance exercée par le moteur électrique 6. Le carter 8 de capteur est réalisé avantageusement en matière plastique moulée, et il occupe une position supérieure par rapport au carter principal 2 de la direction, situé en position inférieure. Le carter 8 de capteur est assemblé sur le carter principal 2 au moyen de deux vis de fixation 9 diamétralement opposées par rapport à l'axe A de l'arbre d'entrée 7, comme le montre plus en détail la figure 2. Un joint d'étanchéité 10, par exemple un joint torique est inséré entre le carter 8 de capteur et le carter principal 2, dans le plan de jonction P de ces deux carters.

Dans les réalisations selon l'état de la technique, le joint 10 constitue le seul moyen d'étanchéité ente les deux carters assemblés 2 et 8.

Selon l'invention, et dans un premier mode de réalisation de celle-ci illustré par la figure 2, l'étanchéité entre les deux carters 2 et 8 est renforcée par une collerette de protection 11, rattachée au carter 8 de capteur autrement dit au carter supérieur. La collerette de protection 11 s'étend vers le bas, sur une hauteur H, en entourant le plan de jonction P et en recouvrant aussi en partie le carter principal 2, autrement dit le carter inférieur. Cette collerette de protection 11 s'étend d'une manière continue, sans interruption, sur toute la périphérie du carter 8 auquel elle se trouve rattachée.

La collerette de protection 11 ménage, entre elle-même et la surface extérieure de la partie du carter principal 2 qu'elle recouvre, un jeu d'assemblage J qui reste ici rempli par l'air ambiant. La hauteur H de la collerette de protection 11 est prévue ici égale à au moins six fois la valeur de jeu d'assemblage J.

Dans la mesure où le carter 8 de capteur est réalisé en matière plastique moulée, la collerette de protection 11 est réalisée dans la même matière, directement par moulage avec ce carter 8.

Sur le véhicule, la collerette 11 assure une protection de la zone d'assemblage des deux carters 2 et 8, aussi bien contre les jets de lavage à haute pression que contre le brouillard salin. Plus particulièrement, la présence de ladite collerette 11 forme une chicane vis-à-vis de projections venant du bas, et un écran vis-à-vis de projections venant du haut.

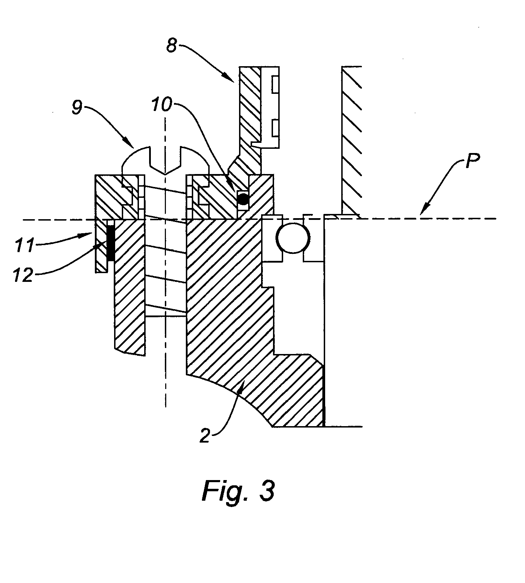

La figure 3, sur laquelle les éléments correspondants sont désignés par les mêmes références que sur la figure 2, illustre un deuxième mode de réalisation de l'invention, dans lequel le jeu d'assemblage J est rempli d'une matière d'étanchéité 12. La matière d'étanchéité 12, venant combler le jeu J, est introduite lors de l'assemblage du carter 8 de capteur sur le carter de direction principal 2. Cette matière d'étanchéité 12 peut être une graisse très visqueuse, ou une résine élastomère réticulable souple du type époxyde, polyuréthane, acrylate ou silicone, ou encore d'un joint en caoutchouc. Dans ce dernier cas, le joint constituant la matière d'étanchéité 12 se trouve comprimé entre la collerette 11 et la partie du carter de direction 2 recouverte par la collerette 11, ledit joint étant mis en compression lors de l'assemblage des deux carters 2 et 8.

Dans ce deuxième mode de réalisation, la présence de la matière d'étanchéité 12 améliore encore la protection au niveau du plan de jonction P entre les deux carters 2 et 8.

On ne s'éloignerait pas du cadre de l'invention, telle que définie dans les revendications annexées :
- Dans le mode de réalisation tel qu'illustré par la figure 3, en utilisant toute matière d'étanchéité appropriée ;
- En appliquant l'invention à un assemblage de plus de deux carters, lesquels peuvent loger tous organes mécaniques ou autres, et être assemblés au moyen de vis elles aussi en nombre quelconque ;
- En destinant l'invention à des systèmes de direction de tous types, qu'il s'agisse de directions manuelles ou de directions assistées, qui elles-mêmes peuvent appartenir à toutes catégories : directions assistées hydrauliques, ou directions assistées électriques avec moteur d'assistance pouvant agir au niveau de la crémaillère ou du pignon ou de la colonne de direction.

## Revendications

1. Assemblage d'au moins deux carters dans un système de direction de véhicule automobile, en particulier assemblage du type vissé (9) et comportant des moyens d'étanchéité, incluant notamment au moins un joint (10) mis en place dans un plan de jonction (P) entre deux carters (2, 8), **caractérisé en ce que** les moyens d'étanchéité comprennent aussi une collerette de protection de protection (11) qui est solidaire de l'un des carters (8) et qui dépasse de ce carter (8) en entourant le plan de jonction (P), et qui recouvre en partie un autre carter (2) en laissant entre cet autre carter (2) et elle-même un jeu d'assemblage (J), la hauteur (H) de la collerette (11) étant égale ou supérieure à six fois la valeur du jeu d'assemblage (J), et la collerette de protection (11) s'étendant d'une manière continue, sans interruption, sur toute la périphérie du carter (8) auquel elle se trouve rattachée.

2. Assemblage de carters selon la revendication 1, **caractérisé en ce que** la collerette de protection (11) est formée sur le carter (8) situé en position supérieure, et recouvre en partie le carter (2) situé en position inférieure, le système de direction (1) étant considéré ici dans sa position montée sur le véhicule.

3. Assemblage de carters selon la revendication 2, **caractérisé en ce que** le carter supérieur est un carter de capteur (8), et **en ce que** le carter inférieur est le carter principal (2) de la direction, logeant la crémaillère (3).

4. Assemblage de carters selon la revendication 2 ou 3, **caractérisé en ce que** le carter supérieur (8) est réalisé en matière plastique moulée, la collerette de protection (11) étant réalisée par moulage avec ce carter supérieur (8).

5. Assemblage de carters selon l'une des revendications 1 à 4, **caractérisé en ce que** la collerette de protection (11) solidaire de l'un des carters (8) recouvre en partie l'autre carter (2), en ménageant un jeu d'assemblage (J) qui reste rempli par l'air ambiant.

6. Assemblage de carters selon l'une des revendications 1 à 4, **caractérisé en ce que** le jeu d'assemblage (J) entre la collerette de protection (11) et la partie de carter (2) recouverte par cette collerette de protection (11) est rempli d'une matière d'étanchéité (12), introduite lors de l'assemblage des carters (2, 8).

7. Assemblage de carters selon la revendication 6, **caractérisé en ce que** la matière d'étanchéité (12), venant combler le jeu d'assemblage (J) est une graisse visqueuse.

8. Assemblage de carters selon la revendication 6, **caractérisé en ce que** la matière d'étanchéité (12), venant combler le jeu d'assemblage (J) est une résine élastomère réticulable souple, du type époxyde, polyuréthane, acrylate ou silicone.

9. Assemblage de carters selon la revendication 6, **caractérisé en ce que** la matière d'étanchéité (12), venant combler le jeu d'assemblage (J) est un joint en caoutchouc, comprimé entre la collerette protection (11) et la partie de carter (2) recouverte par cette collerette, ledit joint étant mis en compression lors de l'assemblage des carters (2, 8).

## Patentansprüche

1. Zusammensetzung aus mindestens zwei Gehäusen in einem Kraftfahrzeug-Lenksystem, insbesondere Zusammensetzung geschraubter Art (9), die Dichtungsmittel umfasst, die insbesondere mindestens eine Dichtung (10) umfassen, die in einer Verbindungsebene (P) zwischen zwei Gehäusen (2, 8) eingesetzt ist, **dadurch gekennzeichnet, dass** die Dichtungsmittel auch einen Schutzflansch (11) umfassen, der mit einem der Gehäuse (8) fest verbunden ist und über dieses Gehäuse (8) hinausragt, indem er die Verbindungsebene (P) umgibt, und der teilweise ein anderes Gehäuse (2) abdeckt und dabei zwischen diesem anderen Gehäuse (2) und sich selber ein Passungsspiel (J) freilässt, wobei die Höhe (H) des Flansches (11) gleich oder größer als sechsmal der Wert des Passungsspiels (J) ist, und wobei sich der Schutzflansch (11) durchgehend ohne Unterbrechung über den gesamten Umfang des Gehäuses (8) erstreckt, an dem er angebracht ist.

2. Gehäusezusammensetzung nach Anspruch 1, **dadurch gekennzeichnet, dass** der Schutzflansch (11) auf dem Gehäuse (8), das sich in der oberen Position befindet, gebildet ist und teilweise das Gehäuse (2) bedeckt, das sich in der unteren Position befindet, wobei das Lenksystem (1) hier in seiner in das Fahrzeug eingebauten Position betrachtet wird.

3. Gehäusezusammensetzung nach Anspruch 2, **dadurch gekennzeichnet, dass** das obere Gehäuse ein Sensorgehäuse (8) ist, und dass das untere Gehäuse das Hauptgehäuse (2) der Lenkung ist, das die Zahnstange (3) aufnimmt.

4. Gehäusezusammensetzung nach Anspruch 2 oder 3, **dadurch gekennzeichnet, dass** das obere Gehäuse (8) aus Formstoff ausgebildet ist, wobei der Schutzflansch (11) durch Formen mit diesem oberen Gehäuse (8) ausgebildet ist.

5. Gehäusezusammensetzung nach einem der Ansprüche 1 bis 4, **dadurch gekennzeichnet, dass** der Schutzflansch (11), der mit einem der Gehäuse (8) fest verbunden ist, teilweise das andere Gehäuse (2) abdeckt und dabei ein Passungsspiel (J) freilässt, das mit Umgebungsluft gefüllt bleibt.

6. Gehäusezusammensetzung nach einem der Ansprüche 1 bis 4, **dadurch gekennzeichnet, dass** das Passungsspiel (J) zwischen dem Schutzflansch (11) und dem Gehäuseteil (2), der von diesem Schutzkragen (11) abgedeckt wird, mit Dichtungsmaterial (12) gefüllt ist, das beim Zusammensetzen der Gehäuse (2, 8) eingeführt wird.

7. Gehäusezusammensetzung nach Anspruch 6, **dadurch gekennzeichnet, dass** das Dichtungsmaterial (12), welches das Passungsspiel (J) ausfüllt, ein zähflüssiges Fett ist.

8. Gehäusezusammensetzung nach Anspruch 6, **dadurch gekennzeichnet, dass** das Dichtungsmaterial (12), welches das Passungsspiel (J) ausfüllt, ein weiches vernetzbares Elastomerharz nach Art von Epoxid, Polyurethan, Acrylat oder Silikon ist.

9. Gehäusezusammensetzung nach Anspruch 6, **dadurch gekennzeichnet, dass** das Dichtungsmaterial (12), welches das Passungsspiel (J) ausfüllt, eine Gummidichtung ist, die zwischen dem Schutzflansch (11) und dem Gehäuseteil (2), der von diesem Flansch abgedeckt wird, zusammengedrückt wird, wobei die Dichtung beim Zusammensetzen der Gehäuse (2, 8) komprimiert wird.

## Claims

1. An assembly of at least two casings in a steering system of a motor vehicle, in particular a screw-type assembly (9) and containing sealing means, including in particular at least one gasket (10) placed in a junction plane (P) between two casings (2, 8), **characterized in that** the sealing means also comprise a protective flange (11) which is integral with one of the casings (8) and which exceeds this casing (8) by surrounding the junction plane (P), and which covers in part another casing (2) leaving between this other casing (2) and itself an assembly clearance (J), and the height (H) of the flange (11) being higher than or equal to six times the value of the assembly clearance (J), and the protective flange (11) extending in a continuous manner, without interruption, along the entire periphery of the casing (8) to which it is fastened.

2. The casing assembly according to claim 1, **characterized in that** the protective flange (11) is formed on the casing (8) located in upper position, and covers in part the casing (2) located in lower position, the steering system (1) being considered here in its mounted position on the vehicle.

3. The casing assembly according to claim 2, **characterized in that** the upper casing is a sensor casing (8), and **in that** the lower casing is the main steering casing (2), housing the rack (3).

4. The casing assembly according to claim 2 or 3, **characterized in that** the upper casing (8) is made of molded plastic material, the protective flange (11) being made by molding with this upper casing (8).

5. The casing assembly according to any of claims 1 to 4, **characterized in that** the protective flange (11) integral with one of the casings (8) covers in part the other casing (2), by arranging an assembly clearance (J) which remains filled with ambient air.

6. The casing assembly according to any of claims 1 to 4, **characterized in that** the assembly clearance (J) between the protective flange (11) and the casing portion (2) covered by this protective flange (11) is filled with a sealing material (12), introduced during the assembly of the casings (2, 8).

7. The casing assembly according to claim 6, **characterized in that** the sealing material (12), filling the assembly clearance (J) is a viscous grease.

8. The casing assembly according to claim 6, **characterized in that** the sealing material (12), filling the assembly clearance (J) is a flexible cross-linkable elastomer resin, of the epoxy, polyurethane, acrylate or silicone type.

9. The casing assembly according to claim 6, **characterized in that** the sealing material (12), filling the assembly clearance (J) is a rubber gasket, compressed between the protective flange (11) and the casing portion (2) covered by this flange, said gasket being placed in compression during the assembly of the casings (2, 8).
